# EUROPEAN PATENT APPLICATION

(11) **EP 2 835 755 A1**
(43) Date of publication of application: **11.02.2015**
(21) Application number: 14179953.6
(22) Date of filing: 06.08.2014
(51) Int. Cl.: G06F 21/31, H04N 21/41, H04N 21/4223

(54) **Image display apparatus and operating method thereof**

(30) Priority: 08.08.2013 KR 20130094335
(71) Applicant: Samsung Electronics Co., Ltd, Gyeonggi-do 443-742 (KR)
(72) Inventor: Kim, Sung-hyun, Gyeonggi-do (KR); Kooh, Sung-wook, Seoul (KR); Kim, Hue-yin, Gyeonggi-do (KR); Lee, Sang-il, Gyeonggi-do (KR)
(74) Representative: Grünecker, Kinkeldey, Stockmair & Schwanhäusser

(57) **Abstract**

An image display apparatus and an operating method thereof are provided. The operating method of the image display apparatus includes receiving a request of entering into a personal screen mode from a first control device, receiving an input of user authentication information, when the received input of user authentication information coincides with user authentication information corresponding to a first personal screen, displaying the first personal screen, and granting, o the first control device, a control of the first personal screen that is displayed t.

## Description

The present disclosure relates to an image display apparatus and an operating method thereof. More particularly, the present disclosure relates to an image display apparatus that grants a control of a personal screen to a control device based on user authentication and an operating method thereof.

### BACKGROUND

An image display apparatus is an apparatus having a function of displaying a viewable image to users. Users may watch a broadcasting program via the image display apparatus. The image display apparatus displays a broadcasting program that is selected by the user among broadcasting signals transmitted from a broadcasting station. Presently, a broadcasting service is turning into a digital broadcasting service from an analogous broadcasting service worldwide.

A digital broadcasting service is a broadcasting service that transmits a digital image and sound. In contrast to an analog broadcasting service, the digital broadcasting service has less amount of loss in data because of the strong nature against external noises thereof, the digital broadcasting service may easily correct errors, and the digital broadcasting service may provide a vivid and high-resolution screen. In addition, in contrast to the analog broadcasting service, the digital broadcasting service makes a duplex service available.

Furthermore, recently, smart Televisions (TVs) providing a variety of content in addition to the digital broadcasting function have been provided. Smart TVs aim to analyze and provide content and/or features that users want without requiring manipulations by the users (e.g., the Smart TVs operate actively rather than operating passively according to selections of the users).

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide an image display apparatus that may reduce external interruptions when using a personal screen, by granting a control of the personal screen only to a user in charge, and an operating method thereof.

Another aspect of the present disclosure is to provide an image display apparatus in which a conversion of a personal screen and a control thereof is possible and an operating method thereof.

Another aspect of the present disclosure is to provide an image display apparatus that may terminate displaying of a personal screen when a user corresponding to the personal screen is absent and an operating method thereof.

Additional aspects will be set forth in part in the description which follows and, in part, will be apparent from the description, or may be learned by practice of the presented various embodiments.

In accordance with an aspect of the present disclosure, an operating method of an image display apparatus is provided. The operating method includes receiving a request of entering into a personal screen mode from a first control device, receiving an input of user authentication information, when the received input of user authentication information coincides with user authentication information corresponding to a first personal screen, displaying the first personal screen, and granting, to the first control device, a control of the first personal screen that is displayed.

In accordance with another aspect of the present disclosure, the method further includes registering the first control device to which the control is granted as a control device corresponding to the first personal screen.

In accordance with another aspect of the present disclosure, the user authentication information includes at least one of user's facial information, predetermined pattern information, user's voiceprint information, a password, and identification information of a control device.

In accordance with another aspect of the present disclosure, the method further includes receiving a control command from the first control device and controlling and displaying the first personal screen according to the control command.

In accordance with another aspect of the present disclosure, the method further includes terminating the displaying of the first personal screen when the control command is not received within a predetermined period of time.

In accordance with another aspect of the present disclosure, the terminating of the displaying of the first personal screen further includes displaying a message for confirming as to an absence of a user corresponding to the first personal screen when the control command is not received within a predetermined period of time.

In accordance with another aspect of the present disclosure, the method further includes terminating the displaying of the first personal screen when a user corresponding to the first personal screen is not recognized.

In accordance with another aspect of the present disclosure, the method further includes: receiving a control command from a second control device, displaying a message for requesting to select whether to convert the first personal screen to a second personal screen corresponding to the second control device, receiving an input of selecting whether to convert the first personal screen to the second personal screen from the first control device, terminating the displaying of the first personal screen, displaying the second personal screen, and granting a control of the second personal screen to the second control device.

In accordance with another aspect of the present disclosure, the displaying of the second personal screen further includes receiving an input of user authentication information, and when the received input of user authentication information coincides with user authentication information corresponding to the second personal screen, displaying the second personal screen.

In accordance with another aspect of the present disclosure, the method further includes receiving a control command from a third control device, determining whether the third control device is one of a plurality of control devices that correspond to the first personal screen, and in response to a determination that the third control device is one of a plurality of control devices that correspond to the first personal screen, controlling and displaying the first personal screen according to the control command from the third control device.

In accordance with another aspect of the present disclosure, an image display apparatus is provided. The image display apparatus includes a user input unit configured to receive a request of entering into a personal screen mode from a first control device and receiving an input of user authentication information, a display unit configured to display the first personal screen when the received input of user authentication information coincides with user authentication information corresponding to the first personal screen, and a control unit configured to grant, to the first control device, a control of the first personal screen that is displayed.

In accordance with another aspect of the present disclosure, the control unit registers the first control device to which the control is granted as a control device corresponding to the first personal screen.

In accordance with another aspect of the present disclosure, the user input unit receives a control command from the first control device, and the control unit controls and displays the first personal screen according to the control command.

In accordance with another aspect of the present disclosure, the control unit terminates the displaying of the first personal screen, when the control command is not received within a predetermined period of time.

In accordance with another aspect of the present disclosure, the control unit displays a message for confirming an absence of a user corresponding to the first personal screen, when the control command is not received within a predetermined period of time.

In accordance with another aspect of the present disclosure, the control unit terminates the displaying of the first personal screen, when a user corresponding to the first personal screen is not recognized.

In accordance with another aspect of the present disclosure, the user input unit receives a control command from a second control device, the display unit displays a message for requesting to select whether to convert the first personal screen to a second personal screen corresponding to the second control device, the control unit terminates the displaying of the first personal screen and displays the second personal screen, in response to receiving an input of selecting whether to convert the first personal screen to the second personal screen from the first control device, and grants a control of the second personal screen to the second control device.

In accordance with another aspect of the present disclosure, the user input unit receives a control command from a third control device, and the control unit determines whether the third control device is one of a plurality of control devices that correspond to the first personal screen, controls and displays the first personal screen according to the control command, in response to determining that the third control device is one of a plurality of control devices that correspond to the first personal screen.

In accordance with another aspect of the present disclosure, a computer readable medium embodies thereon a computer program for executing an operating method of an image display apparatus is provided. The method includes receiving a request of entering into a personal screen mode from a first control device, receiving an input of user authentication information, when the received input of user authentication information coincides with user authentication information corresponding to a first personal screen, displaying the first personal screen, and granting, to the first control device, a control of the first personal screen that is displayed.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram illustrating a configuration of an image display apparatus according to an embodiment of the present disclosure;
FIG. 2 is a block diagram illustrating a configuration of an image display apparatus according to an embodiment of the present disclosure;
FIG. 3 is a block diagram illustrating a configuration of a remote control device, according to an embodiment of the present disclosure;
FIG. 4 is a flowchart illustrating an operating method of an image display apparatus according to an embodiment of the present disclosure;
FIG. 5 is a view illustrating an operation of entering into a personal screen mode according to an embodiment of the present disclosure;
FIGS. 6A, 6B, and 6C are views illustrating an authentication method according to an embodiment of the present disclosure;
FIG. 7 is a view illustrating a personal screen and an operation of controlling the personal screen according to an embodiment of the present disclosure;
FIG. 8 is a flowchart illustrating an operating method of an image display apparatus according to an embodiment of the present disclosure;
FIGS. 9, 10, and 11 are views for references for explaining a conversion of a personal screen and a control thereof according to an embodiment of the present disclosure;
FIG. 12 is a flowchart illustrating an operating method of terminating displaying of a personal screen according to an embodiment of the present disclosure;
FIG. 13 is a view illustrating an operating method of terminating displaying of a personal screen according to an embodiment of the present disclosure; and
FIG. 14 is a view illustrating an operating method of terminating displaying of a personal screen according to an embodiment of the present disclosure.

The same reference numerals are used to represent the same elements throughout the drawings.

### DETAILED DESCRIPTION

The following description with reference to the accompanying drawings is provided to assist in a comprehensive understanding of various embodiments of the present disclosure as defined by the claims. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims.

It is to be understood that the singular forms "a," "an," and "the" include plural referents unless the context clearly dictates otherwise. Thus, for example, reference to "a component surface" includes reference to one or more of such surfaces.

The terms, such as 'unit' or 'module', should be understood as a unit that processes at least one function or operation and that may be embodied in a hardware manner, a software manner, or a combination of the hardware manner and the software manner.

As used herein, the term "and/or" includes any and all combinations of one or more of the associated listed items. Expressions such as "at least one of," when preceding a list of elements, modify the entire list of elements and do not modify the individual elements of the list.

According to various embodiments of the present disclosure, an electronic device may include communication functionality. For example, an electronic device may be a smart phone, a tablet Personal Computer (PC), a mobile phone, a video phone, an e-book reader, a desktop PC, a laptop PC, a netbook PC, a Personal Digital Assistant (PDA), a Portable Multimedia Player (PMP), an mp3 player, a mobile medical device, a camera, a wearable device (e.g., a Head-Mounted Device (HMD), electronic clothes, electronic braces, an electronic necklace, an electronic appcessory, an electronic tattoo, or a smart watch), and/or the like.

According to various embodiments of the present disclosure, an electronic device may be a smart home appliance with communication functionality. A smart home appliance may be, for example, a television, a Digital Video Disk (DVD) player, an audio, a refrigerator, an air conditioner, a vacuum cleaner, an oven, a microwave oven, a washer, a dryer, an air purifier, a set-top box, a TV box (e.g., Samsung HomeSync™, Apple TV™, or Google TV™), a gaming console, an electronic dictionary, an electronic key, a camcorder, an electronic picture frame, and/or the like.

According to various embodiments of the present disclosure, an electronic device may be a medical device (e.g., Magnetic Resonance Angiography (MRA) device, a Magnetic Resonance Imaging (MRI) device, Computed Tomography

(CT) device, an imaging device, or an ultrasonic device), a navigation device, a Global Positioning System (GPS) receiver, an Event Data Recorder (EDR), a Flight Data Recorder (FDR), an automotive infotainment device, a naval electronic device (e.g., naval navigation device, gyroscope, or compass), an avionic electronic device, a security device, an industrial or consumer robot, and/or the like.

According to various embodiments of the present disclosure, an electronic device may be furniture, part of a building/structure, an electronic board, electronic signature receiving device, a projector, various measuring devices (e.g., water, electricity, gas or electro-magnetic wave measuring devices), and/or the like that include communication functionality.

According to various embodiments of the present disclosure, an electronic device may be any combination of the foregoing devices. In addition, it will be apparent to one having ordinary skill in the art that an electronic device according to various embodiments of the present disclosure is not limited to the foregoing devices.

According to various embodiments of the present disclosure, an image apparatus may be an electronic device or may otherwise be comprised in an electronic device.

According to various embodiments of the present disclosure, a control unit may be an electronic device.

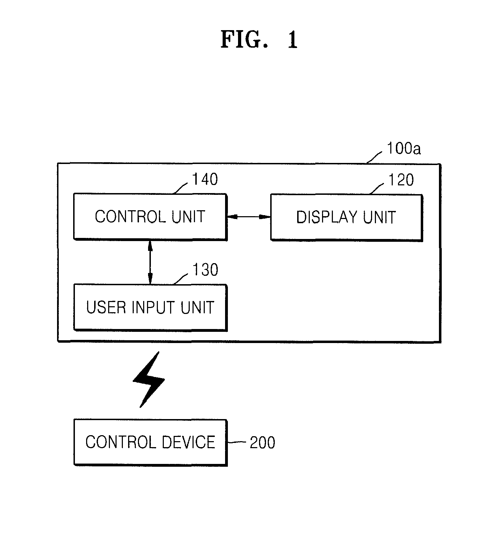

FIG. 1 is a block diagram illustrating a configuration of an image display apparatus according to an embodiment of the present disclosure.

Referring to FIG. 1, an image display apparatus 100a according to an embodiment of the present disclosure may include a display unit 120, a user input unit 130, and a control unit 140.

The user input unit 130 transmits a signal that is input by a user to the control unit 140 or transmits a signal from the control unit 140 to the user.

For example, the user input unit 130 may receive a signal that is input by the user from an external control device and may transmit the signal to the control unit 140. Alternatively, the user input unit 130 may transmit a signal from the control unit 140 to the external control device.

According to various embodiments of the present disclosure, the user input unit 130 may receive a request of entering into a personal screen mode from a control device 200. In addition, the user input unit 130 may receive user authentication information that is input to the control device 200 by the user.

The control unit 140 may process an image signal and input the image signal to the display unit 120. Accordingly, an image corresponding to the image signal may be displayed on the display unit 120. In addition, the control unit 140 may control the image display apparatus 100a by a user command that is input via the user input unit 130, by an internal program, and/or the like.

For example, according to various embodiments of the present disclosure, when receiving the request of entering into the personal screen mode from a control device 200 (e.g., in response to receiving a request to enter the personal screen mode), the control unit 140 may request the user authentication information.

Accordingly, the control unit 140 may determine whether the user authentication information that is input coincides with user authentication information corresponding to a first personal screen. If the user authentication information that is input coincides with user authentication information corresponding to the first personal screen, the control unit 140 may control to display the first personal screen on the display unit 120. In addition, the control unit 140 may grant a control of the first personal screen to the control device 200.

In addition, the control unit 140 may register the control device 200 to which the control is granted as a control device corresponding to the first personal screen.

When a control command is not received within a predetermined time from the control device 200 to which the control is granted (e.g., in response to a control command not being received within the predetermined time), the control unit 140 may control to terminate the displaying of the first personal screen.

When a user corresponding to the first personal screen is not recognized (e.g., in response to a user not being recognized), the control unit 140 may control to terminate the displaying of the first personal screen.

The display unit 120 generates a driving signal by converting an image signal, a data signal, an On-Screen-Display (OSD) signal, a control signal processed in the control unit 140, and/or the like.

The display unit 120 may be embodied as a Plasma Display Panel (PDP), a Liquid Crystal Display panel (LCD), an Organic Light-Emitting Display (OLED) panel, a flexible display panel, and/or the like. In particular, the display unit 120 may be embodied as a three-Dimensional (3D) display panel.

The display unit 120 may be used as an input device as well as an output device. For example, the display unit 120 may include or may otherwise be implemented as a touch screen.

According to various embodiments of the present disclosure, the display unit 120 may display a personal screen (e.g., the first personal screen) corresponding to the user authentication information coinciding with the user authentication information that is input.

In addition, when the control command is not received within a predetermined time from the first control device to which the control is granted (e.g., in response to a control command not being received within the predetermined time), the display unit 120 may display a message for confirming as to an absence of the user corresponding to the first personal screen.

When receiving a control command from a second control device 200b (e.g., in response to receiving a control command from the second control device 200b), the display unit 120 may display a message for requesting a selection of whether to agree as to a conversion of the first personal screen into a second personal screen corresponding to the second control device 200b.

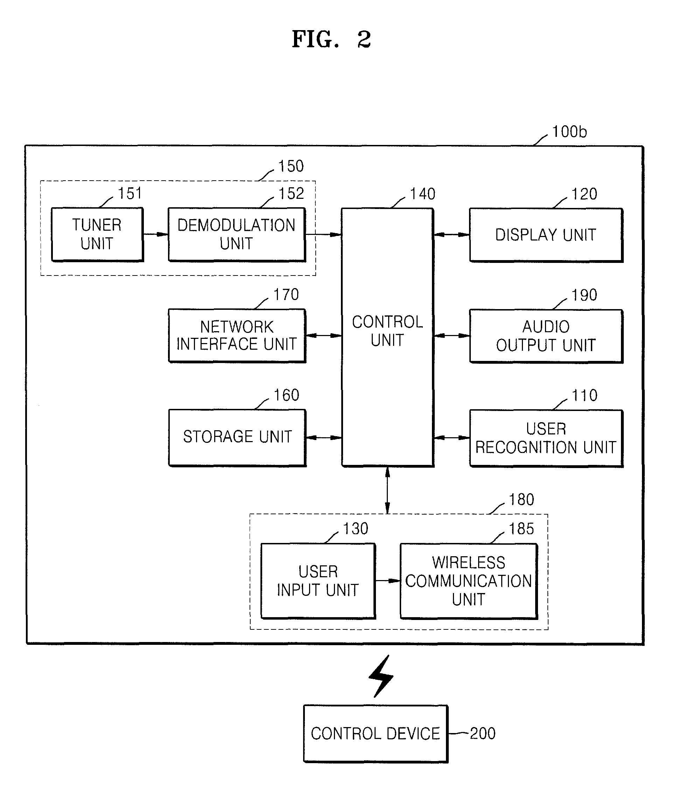

FIG. 2 is a block diagram illustrating a configuration of an image display apparatus according to an embodiment of the present disclosure.

Referring to FIG. 2, an image display apparatus 100b according to another embodiment of the present disclosure may include a user recognition unit 110, a display unit 120, a user input unit 130, a control unit 140, a broadcasting receiving unit 150, a storage unit 160, an external device interface unit 180, a sensor unit (not shown), and an audio output unit 190. The image display apparatus 100b may also include a network interface unit 170.

The control unit 140, the display unit 120, and the user input unit 130 of FIG. 2 may respectively correspond to the control unit 140, the display unit 120, and the user input unit 130 of FIG. 1, and thus, hereinafter, descriptions about identical aspects will be omitted.

The broadcasting receiving unit 150 may include a tuner unit 151, a demodulation unit 152, and the network interface unit 170. According to various embodiments of the present disclosure, the broadcasting receiving unit 150 may be designed to include the tuner unit 151 and the demodulation unit 152 and not to include the network interface unit 170. In contrast, according to various embodiments of the present disclosure, the broadcasting receiving unit 150 may be designed the network interface unit 170 and not to include the tuner unit 151 and/or the demodulation unit 152.

The tuner unit 151 selects a Radio Frequency (RF) broadcasting signal corresponding to a channel selected by a user or all of the channels stored, among RF broadcasting signals received via an antenna. In addition, the tuner unit 151 converts the selected RF broadcasting signal into an Intermediate Frequency (IF) signal, a baseband image, a sound signal, and/or the like.

For example, if the selected RF signal is a digital broadcasting signal, the tuner unit 151 converts the selected RF signal into a Digital IF signal (DIF), and if the selected RF signal is an analogous broadcasting signal, the tuner unit 151 converts the selected RF signal into an analogous baseband image or sound signal (Composite Video Baseband Signal (CVBS)/Sound Intermediate Frequency (SIF) signal). In other words, the tuner unit 151 may process the digital broadcasting signal or analogous broadcasting signal. The analogous baseband image or sound intermediate frequency (e.g., CVBS/SIF) signal output from the tuner unit 151 may be directly input into the control unit 140.

In addition, the tuner unit 151 may receive an RF broadcasting signal of a signal carrier in accordance with an Advanced Television System Committee (ATSC) method, or an RF broadcasting signal of a plurality of carriers in accordance with a Digital Video Broadcasting (DVB) method.

The tuner unit 151 may sequentially select RF broadcasting signals of all of the broadcasting channels that are stored by a channel memory function, among the RF broadcasting signals received via the antenna, and convert the selected RF broadcasting signals into the IF signals or the baseband image or sound signals.

The tuner unit 151 may include a plurality of tuners to receive broadcasting signals of a plurality of channels. Alternatively, the tuner unit 151 may include a singular tuner for simultaneously receiving the broadcasting signals of the plurality of channels.

The demodulation unit 152 receives the DIF signal that has been converted by the tuner unit 151 and performs demodulation.

The demodulation unit 152 may output a stream signal after performing the demodulation and channel decoding. The stream signal may be a multiplexed signal of an image signal, a sound signal, a data signal, and/or the like.

The stream signal that is output by the demodulation unit 152 may be input into the control unit 140. The control unit 140 outputs an image on the display unit 120 and outputs a sound via the audio output unit 190, after performing demultiplexing and an image/sound signal processing.

The external device interface unit 180 may transmit or receive data with a connected external device. According to various embodiments of the present disclosure, the external device interface 180 may include a wireless communication unit 185, the user input unit 130, and an Audio/Visual (A/V) input and output unit (not shown).

The external device interface unit 180 may be connected by wire/wirelessly with external devices, such as Digital Versatile Discs (DVDs), blue-ray discs, game devices, cameras, camcorders, computers (e.g., notebook computers), set top boxes, and/or the like. The external device interface unit 180 may perform input/output operations with the external devices.

According to various embodiments of the present disclosure, the external device interface unit 180 may be connected with a control device 200 by wire/wirelessly. The external device interface unit 180 may transmit a control command received from the control device 200 to the control unit 140.

The A/V input and output unit may receive an input of an image signal and a sound signal of the external device. The wireless communication unit 185 may perform short distance wireless communication (e.g., Near Field Communication (NFC) communication, Bluetooth communication, Infrared Data Association (IrDA) communication, and/or the like) with other electronic devices. According to various embodiments of the present disclosure, the wireless communication unit 180 may perform short distance wireless communication with the control device 200.

The user input unit 130 may transmit a control command that is input by a user to the control unit 140 or transmit a signal from the control unit 140 to the user.

For example, the user input unit 130 may transmit/receive a user input signal including a power on/off, a channel selection, and a screen configuration to and from the control device 200, may deliver the user input signal that is input by local keys (not shown) including a power key, a channel key, a volume key, and a configuration value to the control unit 140,may deliver a user input signal that is input into the sensor unit (not shown) that detects a gesture of users to the control unit 140, or transmit the signal from the control unit 140 to the sensor unit (not shown).

The network interface unit 170 may provide an interface for connecting the image display apparatus 100b with a wire/wireless network including an internet network. For example, the network interface unit 170 may receive content or data provided by internet or content providers or network operators via a network. According to various embodiments of the present disclosure, the network interface unit 170 may perform communication with the control device 200 by the wireless network.

The storage unit 160 may store a program for processing and controlling each of the signals of the control unit 140, or store a processed image, sound, data signal, and/or the like.

In addition, the storage unit 160 may serve a function for a temporary storage of the image, sound, data signal, and/or the like that is input into the external device interface unit 180. In addition, the storage unit 160 may store information regarding a certain broadcasting channel by a channel memory function such as a channel map.

FIG. 2 illustrates an embodiment of the present disclosure in which the storage unit 160 is included separately from the control unit 140. However, various embodiments of the present disclosure are not limited thereto. The storage unit 160 may be included in the control unit 140.

The control unit 140 may generate and output a signal for an image output, a sound output, and/or the like by demultiplexing a stream input or processing the demultiplexed signal via the tuner unit 151, the demodulation unit 152, the external interface unit 180, and/or the like.

The image signal that is image-processed by the control unit 140 may be input into the display unit 120 and displayed as an image corresponding to the image signal. In addition, the image signal that is image-processed by the control unit 140 may be input into an external output device by the external device interface unit 180.

The sound signal that is processed by the control unit 140 may be output as a sound via the audio output unit 190. In addition, the sound signal that is processed by the control unit 140 may be input into an external output device by the external device interface unit 180.

Although not illustrated in FIG. 2, the control unit 140 may include a demultiplexing unit and an image processing unit.

In addition, the control unit 140 may control an overall operation of the image display apparatus 100b. For example, the control unit 140 may control the tuner unit 151 to tune an RF broadcasting corresponding to a channel selected by a user or a channel previously stored.

In addition, the control unit 140 may control the image display apparatus 100b by a user command input by the user input unit 130, or by an internal program.

The control unit 140 may control the display unit 120 to display an image. The image displayed on the display unit 120 may be a still image, a video image, a 3D image, and/or the like.

According to various embodiments of the present disclosure, the control unit 140 may recognize a user location, based on an image captured by the user recognition unit 110. For example, a distance (a coordinate of z-axis) between the user and the image display apparatus 100b may be grasped (e.g., determined). In addition, coordinates of x-axis and y-axis of the display unit 120 corresponding to the user location may be grasped (e.g., determined).

According to various embodiments of the present disclosure, when receiving a command of entering into a personal screen mode (e.g., in response to receiving a command to enter into a personal screen mode), the control unit 140 may control the user recognition unit 110 to recognize the user.

The display unit 120 generates a driving signal by converting an image signal, a data signal, an OSD signal, a control signal, and/or the like processed by the control unit 140, or converting an image signal, a data signal, a control signal, and/or the like received from the external device interface unit 180.

The display unit 120 may be embodied as a PDP, LCD, OLED, a flexible display panel, and/or the like. The display unit 120 may be embodied as a 3D display panel.

The display unit 120 may be used as an input device as well as an output device. For example, the display unit 120 may include or may otherwise be implemented as a formed of a touch screen.

The audio output unit 190 receives an input of a signal processed as a sound by the control unit 140 and outputs the signal as a sound.

The user recognition unit 110 may include one or more cameras. The user recognition unit may capture the user by using the camera. Based on the captured image, the user recognition unit 110 may recognize the user.

In addition, when the user registers a personal screen, the user may register the user's face as so as to correspond to the personal screen. Accordingly, the control unit 140 may compare the user face recognized by the user recognition unit 110 with the registered user face, and detect the personal screen corresponding to the user recognized by the user recognition unit 110.

The user recognition unit 110 may be embodied as including one camera, but it is not limited thereto, and may also be embodied as including a plurality of cameras. Meanwhile, the camera may be arranged on an upper portion of the display unit 120 by being embedded in the image display apparatus 100b, or may be arranged separately from the image display apparatus 100b. The image information captured by the camera may be input into the control unit 140.

The control unit 140 may detect a gesture from a user based on respective or combined signals detected by the sensor unit (not shown).

According to various embodiments of the present disclosure, the control device 200 transmits a user input to the user input unit 130. The control device 200 may use a communication method, such as a bluetooth, Radio-Frequency Identification (RFID), Infrared (IR) communication, Ultra Wideband (UWB), a zigbee, and/or the like.

In addition, the control device 200 may receive an image, sound, or data signal from the image display apparatus 100b, and display the signal on the control device 200 or output a sound.

The image display apparatus 100a and the image display apparatus 100b may be a stationary digital broadcasting receiver or a mobile digital broadcasting receiver that may receive a digital broadcasting program.

According to various embodiments of the present disclosure, the image display apparatus 100a and the image display apparatus 100b, may be electronic devices such as TV receivers, monitors, cellular phones, smart phones, notebook computers, digital broadcasting terminals, Personal Digital Assistants (PDAs), Portable Multimedia Players (PMPs), and/or the like.

The block diagrams of the image display apparatus 100a and the image display apparatus 100b illustrated in FIGS. 1 and 2 are block diagrams for explaining various embodiments of the present disclosure. Each of the components of the block diagrams may be integrated, added, or omitted, according to a specification of practical implementations of the image display apparatus 100a and the image display apparatus 100b. In other words, according to various embodiments of the present disclosure, two or more components may be integrated into one component, or one component may be subdivided into two or more components. In addition, the block diagrams only serve for explaining the various embodiments of the present disclosure, and the specific operations and devices of the block diagrams do not limit the scope of various embodiments of the present disclosure.

In contrast to the image display apparatus illustrated in FIG. 2, the image display apparatus 100b may not include the tuner unit 151 and the demodulation unit 152, may receive image content via the network interface unit 170 or the external device interface unit 180, and may reproduce the image content.

The image display apparatus 100a and image display apparatus 100b are examples of image signal processing devices that perform a processing of an image stored or input in the devices. Other examples of the image signal processing devices may include the set top boxes excluding the display unit 120 and the audio output unit 190 illustrated in FIG. 2, the above-described DVD players, blue-ray players, game devices, computers, and/or the like.

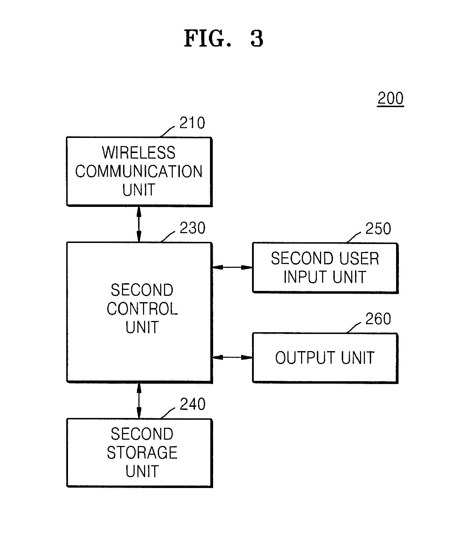

FIG. 3 is a block diagram illustrating a configuration of a remote control device according to an embodiment of the present disclosure.

Referring to FIG. 3, the control device 200 may include a wireless communication unit 210, a second storage unit 240, a second control unit 230, a second user input unit 250, and an output unit 260.

The wireless communication unit 210 transmits and receives a signal with a certain one of the image display apparatuses that are described above according to various embodiments of the present disclosure.

The wireless communication unit 210 may include a wireless internet module a short distance communication module, and/or the like.

The wireless internet module refers to a module for a wireless internet connection, and may be equipped inside or outside of the control device 200. Wireless internet technologies may include a Wireless LAN (Wi-Fi), a Wireless broadband (Wibro), a World interoperability for microwave access (Wimax), a High Speed Downlink Packet Access (HSDPA), and/or the like.

The short distance communication module refers to a module for the short distance communication. Short distance communication technologies may include a bluetooth, RIFD, IR communication, UWB, a zigbee, and/or the like.

According to various embodiments of the present disclosure, the wireless communication unit 210 may include an IR module that may transmit and receive a signal with the image display apparatus 100a and/or the image display apparatus 100b according to an IR communication standard.

According to various embodiments of the present disclosure, a remote control device 200 may transmit a control command regarding a power on/off, a channel change, a volume change, and/or the like to the image display apparatus 100a and/or the image display apparatus 100b by the IR module.

According to various embodiments of the present disclosure, the remote control device 200 may transmit the control command to the image display apparatus 100a and/or the image display apparatus 100b by using the wireless internet technologies and/or the short distance communication technologies.

The second user input unit 250 may be formed as a keypad, a button, a touch pad, a touch screen, and/or the like. Users may input a command regarding the image display apparatus 100a and/or the image display apparatus 100b into the control device 200, by manipulating the second user input unit 250. When the second user input unit 250 includes a hard key button, a user may input the command regarding the image display apparatus 100a and/or the image display apparatus 100b into the control device 200 by pushing the hard key button. When the second user input unit 250 includes the touch screen, a user may input the command regarding the image display apparatus 100a and/or the image display apparatus 100b into the control device 200 by touching a soft key of the touch screen. In addition, the second user input unit 250 may include various kinds of input methods including a scroll key and a jog key, which may be manipulated by the users. The present embodiment of the present disclosure does not limit the scope of the claims of the present disclosure.

The output unit 260 may output an image, a sound signal, and/or the like corresponding to the manipulation of the second user input unit 250 or to a signal transmitted from the image display apparatus 110a and/or the image display apparatus 100b. By the output unit 260 users may recognize the presence or absence of the manipulation of the second user input unit 250 or the control of the image display apparatus 100a and/or the image display apparatus 100b.

For example, the output unit 260 may include an Light Emitting Diode (LED) module, a vibration module, a sound output module, a display module, and/or the like that is lighted, generates a vibration, a sound, or outputs an image, respectively, when the second user input unit 250 is manipulated or a signal is transmitted/received to and from the image display apparatus 100a and/or the image display apparatus 100b by the wireless communication unit 210.

The second storage unit 240 may store a variety of programs, application data, and/or the like that are necessary for a control or operation of the control device 200.

The second control unit 230 controls general operations with respect to the control of the control device 200. The second control unit 230 may transmit a signal corresponding to a manipulation of a certain key of the second user input unit 250 to the image display apparatus 110a and/or the image display apparatus 100b by the wireless communication unit 210.

In addition, the transmitted signal that is input into the image display apparatus 100a and/or the image display apparatus 100b by the wireless communication unit 210 is transmitted to the control unit 140 of the image display apparatus 100a and/or the image display apparatus 100b. The control unit 140 may distinguish information with respect to an operation or key manipulation of the control device 200 from the signal transmitted from the control device 200, and control the image display apparatus 100a and/or the image display apparatus 100b corresponding to the information.

The control device 200 may correspond to a cellular phone, a smart phone, a tablet Personal Computer (PC), and/or the like. However, according to various embodiments of the present disclosure, the control device 200 is not limited thereto. The control device 200 may be embodied in various forms of control devices that may control the image display apparatus.

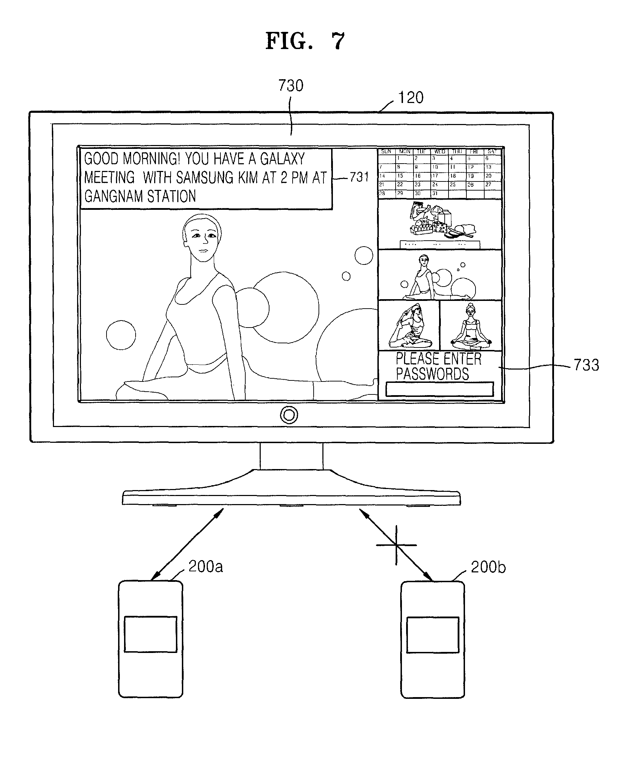

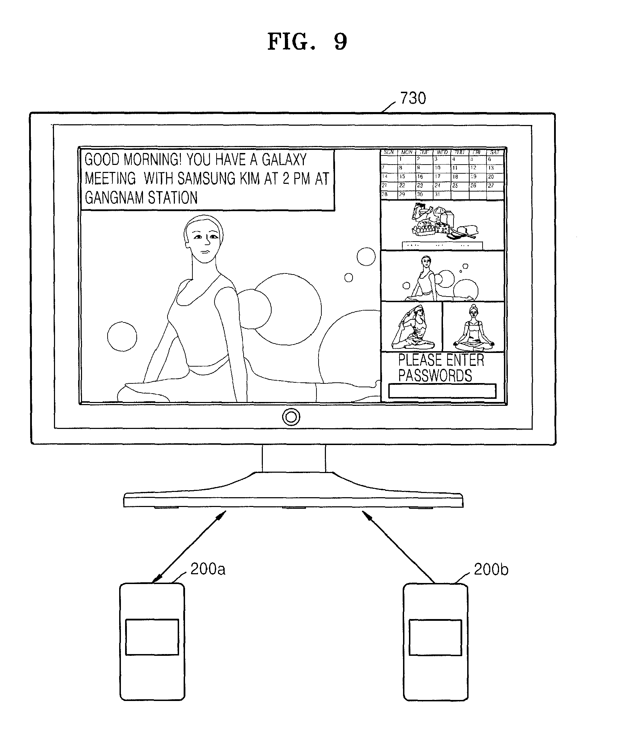

In addition, the control device 200 may include a first control device 200a and a second control device 200b (see FIGS. 7 and 9).

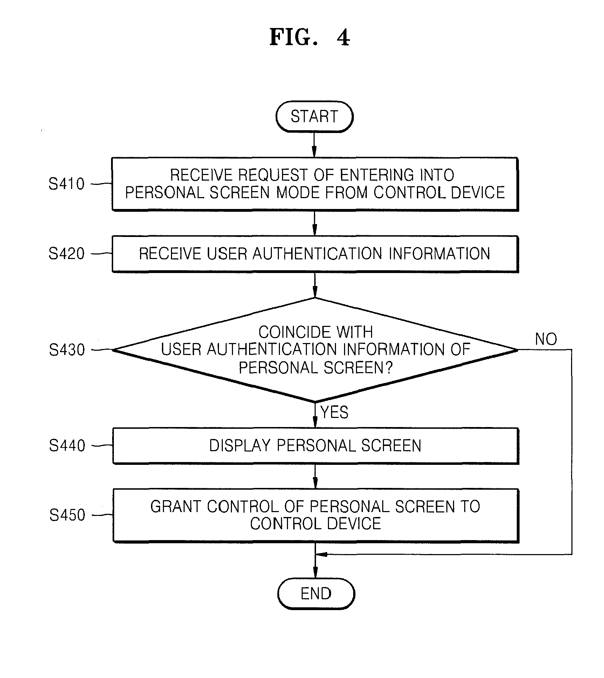

FIG. 4 is a flowchart illustrating an operating method of an image display apparatus according to an embodiment of the present disclosure.

Referring to FIG. 4, at operation S410, the image display apparatus 100a and/or the image display apparatus 100b may receive a request of entering into a personal screen mode from the control device 200.

The request of entering into the personal screen mode may be performed by inputting particular keys of the control device 200, or by selecting a particular menu by using the control device 200.

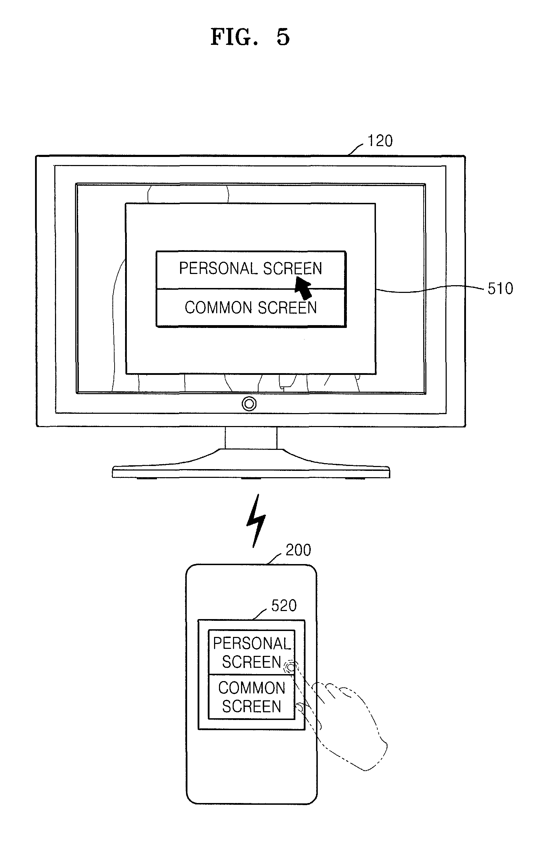

FIG. 5 is a view illustrating an operation of entering into a personal screen mode according to an embodiment of the present disclosure.

Referring to FIG. 5, the image display apparatus 100a and/or the image display apparatus 100b may display a select menu 510 by which the personal screen mode or a common screen mode may be selected, on the display unit 120. Accordingly, users may select the personal screen mode by using the control device 200.

The menu displayed on the display unit 120 may be similarly displayed on the control device. For example, when the control device 200 includes the touch screen 520, the select menu displayed on the display unit 120 may be displayed identically on the touch screen 520 of the control device 200, and the users may select the personal screen mode by touching the touch screen 520.

At operation S420, the image display apparatus 100a and/or the image display apparatus 100b may receive user authentication information. For example, when entering into the personal screen mode, the image display apparatus 100a and/or the image display apparatus 100b may request user authentication information and receive an input of the user authentication information.

The user authentication information may include at least one of user's facial information, a certain pattern information, a password, user's voiceprint information, identification information of the control device 200, and/or the like (e.g., or some combination thereof).

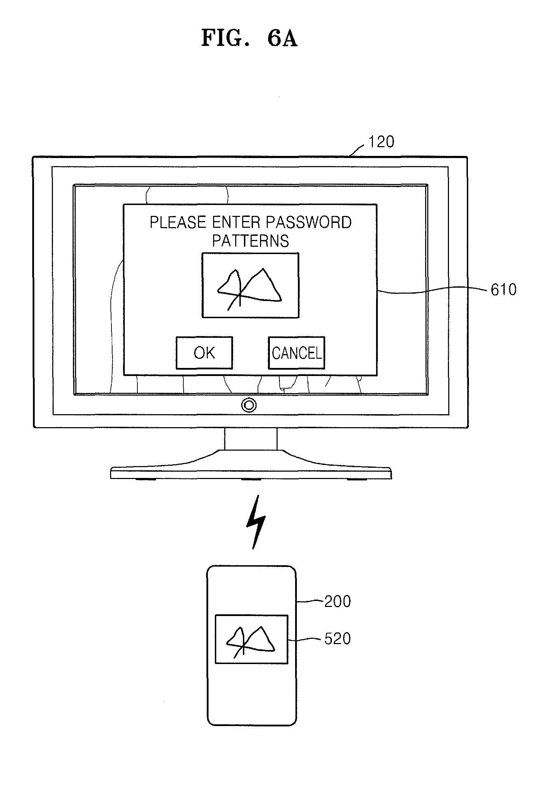

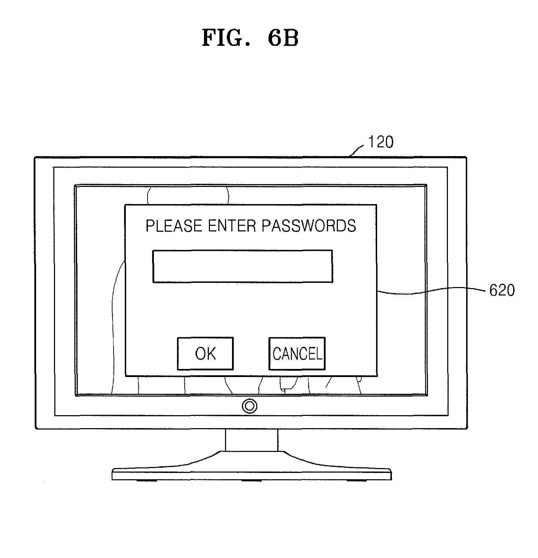

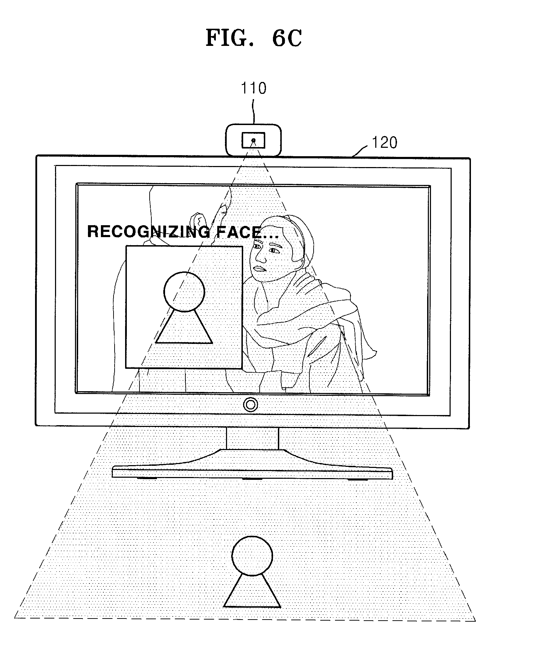

FIGS. 6A, 6B, and 6C are views illustrating an authentication method, according to an embodiment of the present disclosure.

Referring to FIG. 6A, the image display apparatus 100a and/or the image display apparatus 100b may display a message 610 requesting an input of a password pattern, on the display unit 120.

Accordingly, the users may input the certain patterns by using the touch screen 520 of the control device 200. In addition, the image display apparatus 100a and/or the image display apparatus 100b may display the certain patterns that are input on the display unit 120 by using the control device 200.

Referring to FIG. 6B, the image display apparatus 100a and/or the image display apparatus 100b may display a message 620 requesting an input of the password, on the display unit 120. Accordingly, the users may input a password. For example, the user may input a password using the control device 200.

Referring to FIG. 6C, the user recognition unit 110 may perform recognition of a user's face (e.g., may perform facial recognition of a user in proximity of the user recognition unit 110 or sensors thereof). The recognized face may be displayed on the display unit 120.

In addition, although not illustrated in the drawings, the image display apparatus 100a and/or the image display apparatus 100b may receive an input of a user's voice.

According to various embodiments of the present disclosure, the image display apparatus 100a and/or the image display apparatus 100b may receive the identification information of the control device 200. The identification information of the control device 200 may be transmitted to the image display apparatus 100a and/or the image display apparatus 100b by the wireless communication method.

At operation S430, the image display apparatus 100a and/or the image display apparatus 100b may determine whether user authentication information that is input coincides with user authentication information corresponding to the personal screen. For example, the image display apparatus 100a and/or the image display apparatus 100b may perform authentication of the user.

If the image display apparatus 100a and/or the image display apparatus 100b determines that the user authentication information that is input does not coincides with user authentication information corresponding to the personal screen at operation S430, then the image display apparatus 100a and/or the image display apparatus 100b may end the process.

If the image display apparatus 100a and/or the image display apparatus 100b determines that the user authentication information that is input coincides with user authentication information corresponding to the personal screen at operation S430, then the image display apparatus 100a and/or the image display apparatus 100b may proceed to operation S440 at which the image display apparatus 100a and/or the image display apparatus 100b may display the personal screen.

FIG. 7 is a view illustrating a personal screen and an operation of controlling the personal screen according to an embodiment of the present disclosure.

Referring to FIG. 7, the image display apparatus 100a and/or the image display apparatus 100b may display a first personal screen 730, when the certain patterns that are input coincide with password patterns corresponding to the first personal screen 730.

According to various embodiments of the present disclosure, the image display apparatus 100a and/or the image display apparatus 100b may display the first personal screen 730, when the passwords that are input coincide with passwords corresponding to the first personal screen 730.

According to various embodiments of the present disclosure, the image display apparatus 100a and/or the image display apparatus 100b may display the first personal screen 730, when the recognized face coincides with a face of users corresponding to the first personal screen 730.

According to various embodiments of the present disclosure, the image display apparatus 100a and/or the image display apparatus 100b may display the first personal screen 730, when the voiceprint information of the voice that is input coincides with voiceprint information corresponding to the first personal screen 730.

According to various embodiments of the present disclosure, the image display apparatus 100a and/or the image display apparatus 100b may display the first personal screen 730, when the identification information of the control device, which is input, coincides with identification information corresponding to the first personal screen 730.

According to various embodiments of the present disclosure, as illustrated in FIG. 7, the personal screen 730 may include a plurality of pieces of content. The plurality of pieces of content may include at least one of real time broadcastings, games, videos, audios, texts, applications, and/or the like.

The personal screen 730 may include personal content. For example, the personal content may include content that is frequently used by the users, content that is recommended based on the users information, content that is recommended according to a time in which the image display apparatus is used, content that is shared by other users, and/or the like.

The users information may include at least one of a gender, age, a content use history, a search history, a channel viewing history, a matter of interests of users, and/or the like. The personal content may be the content that is recommended based on the users information.

For example, if the user is female in her 20's, the image display apparatus 100a and/or the image display apparatus 100b may receive a recommendation of content that is the most used by females in their 20's, from a recommendation server. The image display apparatus 100a and/or the image display apparatus 100b may display the content on the personal screen 730.

According to various embodiments of the present disclosure, the personal screen 730 may display content (e.g., a broadcasting channel) based on the channel viewing history and the time of using the image display apparatus of users. For example, the personal screen 730 may display content (e.g., a broadcasting channel) based on the channel viewing history and the time of using the image display apparatus of users according to a broadcasting channel that is the most viewed in the time period of using the image display apparatus.

In addition, the user's information may be information received from an external device. For example, information, such as the content use history, the search history, the channel viewing history, the matter of interests, and/or the like may be received from external devices (e.g., mobile terminals, tablet PCs, and/or the like) connected with the image display apparatus 100a and the image display apparatus 100b.

The external device may transmit the user's information to the recommended server (not shown). According to various embodiments of the present disclosure, the recommended server may transmit recommended content to the image display apparatus 100a and/or the image display apparatus 100b, based on the user's information that is received. The image display apparatus 100a and/or the image display apparatus 100b may include the recommended content received from the recommended server to be displayed on the personal screen.

In addition, as illustrated in FIG. 7, the personal screen 730 may include an alarm message 731 including user's schedule information.

The image display apparatus 100a and/or the image display apparatus 100b may control to display a predetermined part of the content included in the personal screen and may not display the other part of the content.

According to various embodiments of the present disclosure, the image display apparatus 100a and/or the image display apparatus 100b may receive an input of a password for content 733, the display of which display is restricted. According to various embodiments of the present disclosure, if the password is authenticated, the image display apparatus 100a and/or the image display apparatus 100b may display the restricted content.

At operation S450, the image display apparatus 100a and/or the image display apparatus 100b may grant a control of the personal screen that is displayed on the display unit 120 to the control device 200.

For example, as illustrated in FIG. 7, when the control of the first personal screen that is displayed on the display unit 120 is granted to the first control device 200a (e.g., in response to the first control device 200a being granted control of the first personal screen), the image display apparatus 100a and/or the image display apparatus 100b may control the first personal screen according to the received control command. For example, the image display apparatus 100a and/or the image display apparatus 100b may control the first personal screen according to the received control command when the image display apparatus 100a and/or the image display apparatus 100b receive a control command from the first control device 200a (e.g., in response to receiving a control command from the first control device 200a).

For example, users may convert a broadcasting channel that is displayed on the first personal screen or control a volume, by using the first control device 200a. Alternatively, the users may reproduce content that is included in the first personal screen.

In contrast, if a control device is not granted control to the first personal screen, then the image display apparatus may not perform a control command corresponding to a control command received from the control device. For example, the image display apparatus 100a and/or the image display apparatus 100b do not perform the received control command, when the image display apparatus 100a and/or the image display apparatus 100b receive a control command from the second control device 200b to which the control is not granted.

According to various embodiments of the present disclosure, the image display apparatus 100a and/or the image display apparatus 100b may register the first control device 200a as a control device corresponding to the first personal screen.

When the image display apparatus 100a and/or the image display apparatus 100b receive a control command from a certain control device (e.g., in response to receiving a control command from a certain control device), and if the certain control device is one of a plurality of control devices corresponding to the first personal screen, then the image display apparatus 100a and/or the image display apparatus 100b may control and display the first personal screen according to the control command.

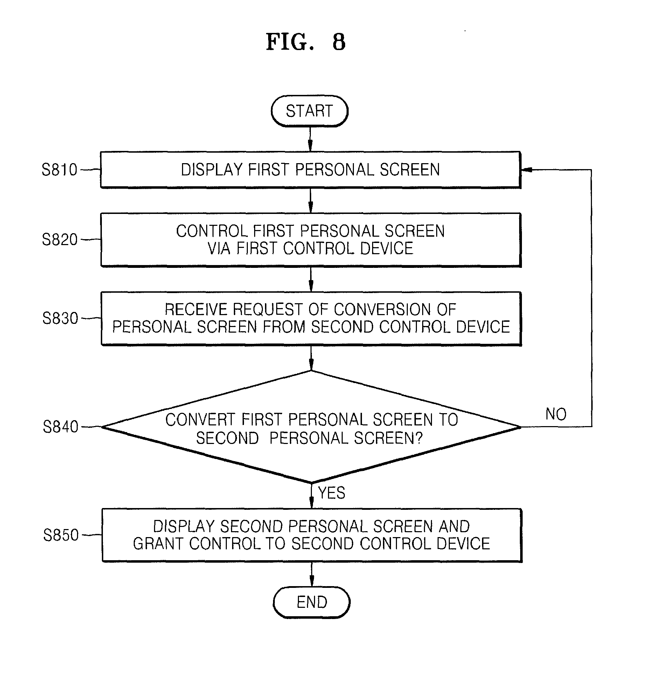

FIG. 8 is a flowchart illustrating an operating method of an image display apparatus according to an embodiment of the present disclosure. FIGS. 9 through 11 are views for references for explaining an operation method according to an embodiment of the present disclosure such as, for example, the operation method of FIG. 8.

Referring to FIG. 8, at operation S810, the image display apparatus 100a and/or the image display apparatus 100b may display the first personal screen.

At operation S820, the image display apparatus 100a and/or the image display apparatus 100b may control the first personal screen using the first control device 200a to which the control of the first personal screen is granted.

At operation S830, the image display apparatus 100a and/or the image display apparatus 100b may receive a request of a conversion of a personal screen from the second control device.

FIGS. 9, 10, and 11 are views for references for explaining a conversion of a personal screen and a control thereof according to an embodiment of the present disclosure.

Referring to FIG. 9, as an example, the second control device 200b may be the control device that is registered as a control device corresponding to the second personal screen. The second control device 200b may transmit the request of the conversion of the personal screen, to the image display apparatus 100a and/or the image display apparatus 100b.

At operation S840, the image display apparatus 100a and/or the image display apparatus 100b may inquire whether to convert the first personal screen to a second personal screen. For example, the image display apparatus 100a and/or the image display apparatus 100b may display a message 1020 for requesting a selection of whether to agree as to a conversion of the first personal screen into the second personal screen on the display unit 120. The image display apparatus 100a and/or the image display apparatus 100b may determine whether to convert the first personal screen to the second personal screen according to a user input.

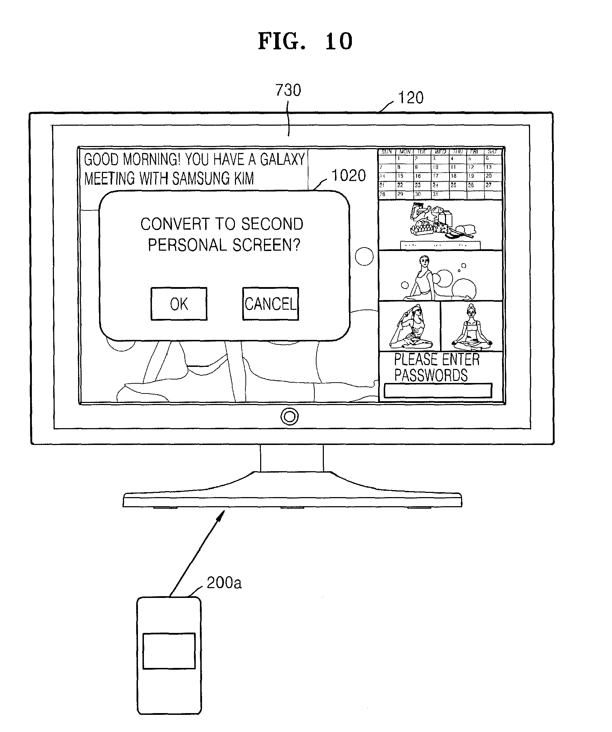

Referring to FIG. 10, the image display apparatus 100a and/or the image display apparatus 100b that receive the request of the conversion of the personal screen from the second control device 200b, may display a message 1020 for requesting a selection of whether to agree as to a conversion of the first personal screen into the second personal screen on the display unit 120.

If the image display apparatus 100a and/or the image display apparatus 100b determine to not to convert the first personal screen to the second personal screen (e.g. in response to user input) at operation S840, then the image display apparatus 100a and/or the image display apparatus 100b may return to operation S810.

In contrast, if the image display apparatus 100a and/or the image display apparatus 100b determine to convert the first personal screen to the second personal screen (e.g. in response to user input) at operation S840, then the image display apparatus 100a and/or the image display apparatus 100b may proceed to operation S850 at which the image display apparatus 100a and/or the image display apparatus 100b may display the second personal screen. The image display apparatus 100a and/or the image display apparatus 100b may grant control to the second control device 200b.

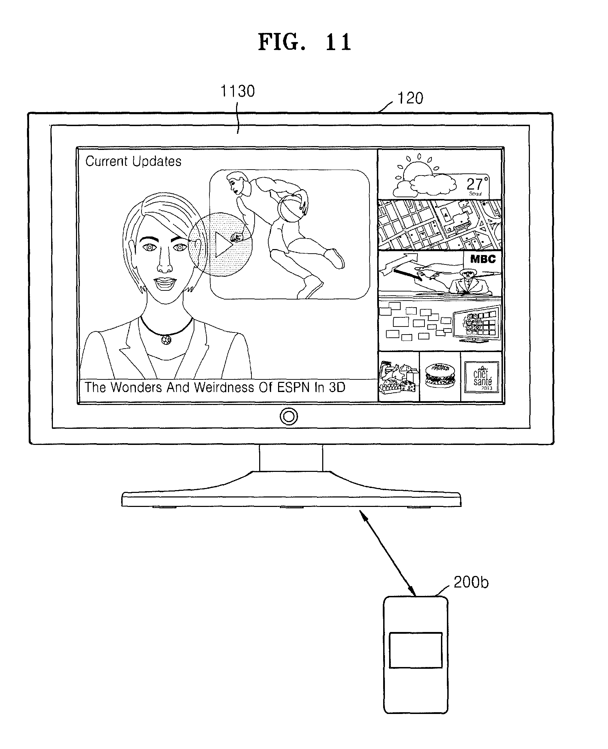

As illustrated in FIG. 11, if the users select yes by using the first control device 200a to which the control is granted, then the image display apparatus 100a and/or the image display apparatus 100b may terminate the displaying of the first personal screen and may display the second personal screen 1130 on the display unit 120.

The image display apparatus 100a and/or the image display apparatus 100b may receive an input of user authentication information, may determine whether the received input of user authentication information coincides with user authentication information corresponding to the second personal screen (e.g., may authenticate a user for the second personal screen), and, when the received input of user authentication information coincides with user authentication information corresponding to the second personal screen, may display the second personal screen 1130.

In addition, the image display apparatus 100a and/or the image display apparatus 100b may grant a control of the second personal screen 1130 to the second control device 200b.

Accordingly, the users may convert a broadcasting channel that is displayed on the second personal screen 1130 or control a volume. Alternatively, the users may reproduce content included on the second personal screen 1130.

In contrast, if the users select "no" by using the first control device 200a, the image display apparatus 100a and/or the image display apparatus 100b may continue to display the first personal screen 730 on the display unit 120, and, according to a control command transmitted from the first control device 200a, may control and display the first personal screen 730.

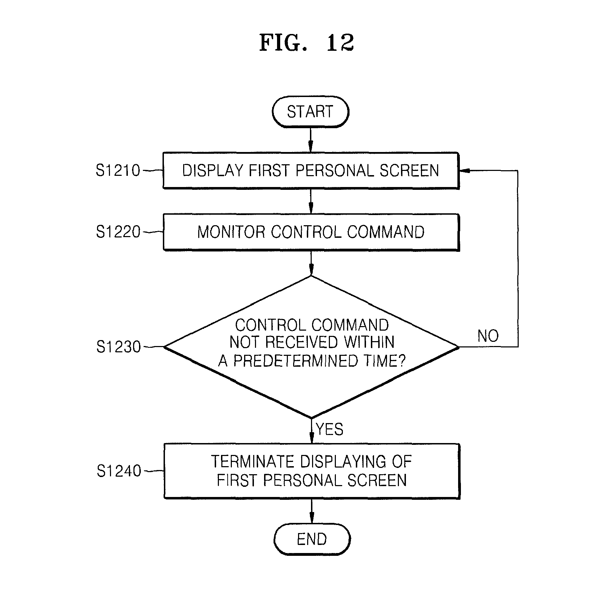

FIG. 12 is a flowchart illustrating an operating method of terminating displaying of a personal screen according to an embodiment of the present disclosure.

Referring to FIG. 12, at operation S1210, a first personal screen is displayed.

At operation S1220, when the first personal screen is displayed, and the control of the first personal screen is granted to the first control device, the image display apparatus 100a and/or the image display apparatus 100b may monitor the control command that is received from the first control device.

At operation S1230, the image display apparatus 100a and/or the image display apparatus 100b determines whether a control command is not received from the first control device within a predetermined time.

If the image display apparatus 100a and/or the image display apparatus 100b determine that the control command is not received from the first control device within the predetermined time at operation S1230, then the image display apparatus 100a and/or the image display apparatus 100b may proceed to operation S1240 at which the image display apparatus 100a and/or the image display apparatus 100b may terminate displaying of the first personal screen. For example, after the monitoring, if the control command is not received within a predetermined time, from the first control device, the image display apparatus 100a and/or the image display apparatus 100b may terminate the displaying of the first personal screen.

The image display apparatus 100a and/or the image display apparatus 100b may display a message for confirming as to an absence of a user corresponding to the personal screen. When it is determined as an absence of the user, the image display apparatus 100a and/or the image display apparatus 100b may terminate the displaying of the first personal screen.

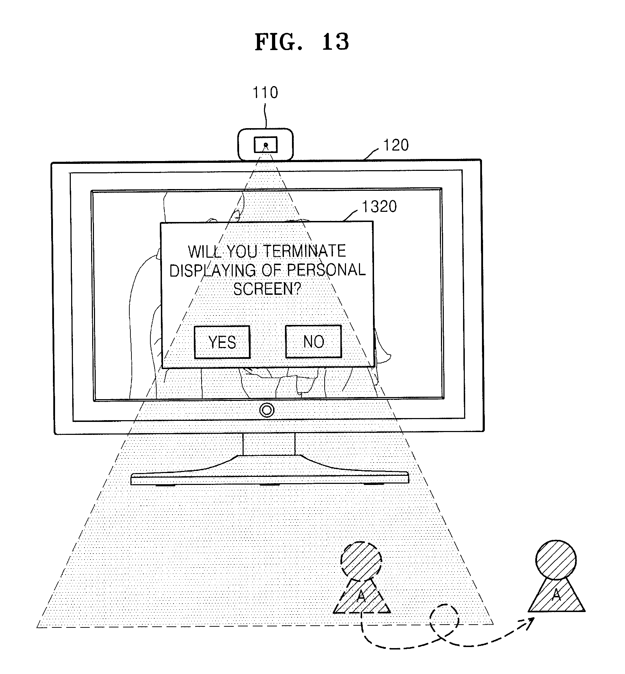

FIG. 13 is a view illustrating an operating method of terminating displaying of a personal screen according to an embodiment of the present disclosure.

Referring to FIG. 13, the image display apparatus 100a and/or the image display apparatus 100b may terminate the displaying of the first personal screen, when a user corresponding to a personal screen that is displayed is not recognized, during the time in which the personal screen is displayed on the display unit 120.

For example, as illustrated in FIG. 13, during the time in which the first personal screen corresponding to a first user A is displayed, when the user A corresponding to the first personal screen is out of a range within which the image display apparatus 100a and/or the image display apparatus 100b may recognize the user A, the image display apparatus 100a and/or the image display apparatus 100b may display a message 1320 inquiring whether to terminate the personal screen mode (e.g., inquiring whether the user wants to terminate the personal screen mode). If the user selects "yes," the image display apparatus 100a and/or the image display apparatus 100b may terminate the displaying of the first personal screen.

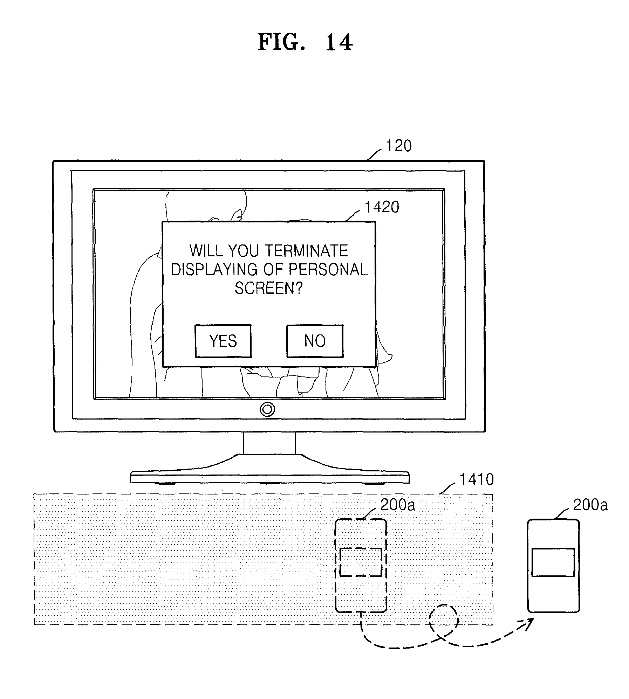

FIG. 14 is a view illustrating an operating method of terminating displaying of a personal screen according to an embodiment of the present disclosure.

Referring to FIG. 14, the first control device 200a may transmit a state signal to the image display apparatus by using a wireless communication method. Accordingly, as illustrated in FIG. 14, when the first control device goes beyond a range 1410 in which the first control device may perform the wireless communication method with the image display apparatus, the image display apparatus 100a and/or the image display apparatus 100b may display a message 1420 inquiring whether to terminate the personal screen (e.g., inquiring whether the user wants to terminate the personal screen mode). When the user selects "yes," the image display apparatus 100a and/or the image display apparatus 100b may terminate the displaying of the first personal screen.

As described above, the image display apparatus 100a and/or the image display apparatus 100b may terminate the displaying of the first personal screen, when the user corresponding to the first personal screen that is displayed on the display unit 120 is determined to be absent (or inactive such as, for example, in a sleep mode or the like).

As described above, according to the various embodiments of the present disclosure, by granting the control of the personal screen only to the user in charge, external interruptions may be reduced and personal service reliability may be enhanced, when using the personal screen. In addition, the conversion of the personal screen and the control thereof is possible, and thus, usability may be boosted. Furthermore, when the user corresponding to the personal screen is absent, terminating the displaying of the personal screen is possible, thereby improving usability of the personal screen.

The image display apparatus and the operating method thereof are not limited to the various embodiments of the present disclosure described above, and, various alterations may be made to the various embodiments of the present disclosure that may be combined with one another totally or partly, selectively.

In addition, other various embodiments of the present disclosure can also be implemented through computer readable code/instructions in/on a medium (e.g., a non-transitory computer readable medium) to control at least one processing element to implement any above described embodiments of the present disclosure. The medium can correspond to any medium/media permitting the storage and/or transmission of the computer readable code.

The computer readable code can be recorded/transferred on a medium (e.g., the non-transitory computer-readable medium) in a variety of ways, with examples of the medium including recording media, such as magnetic storage media (e.g., Read-Only Memory (ROM), floppy disks, hard disks, and/or the like) and optical recording media (e.g., CD-ROMs, DVDs, and/or the like), transmission media such as Internet transmission media, and/or the like. Thus, the medium may be such a defined and measurable structure including or carrying a signal or information, such as a device carrying a bit stream according to various embodiments of the present disclosure. The media may also be a distributed network, so that the computer readable code is stored/transferred and executed in a distributed fashion. Furthermore, the processing element could include a processor or a computer processor, and processing elements may be distributed and/or included in a single device.

It should be understood that the various embodiments described therein should be considered in a descriptive sense only and not for purposes of limitation. Descriptions of features or aspects within each embodiment should typically be considered as available for other similar features or aspects in other various embodiments.

While the present disclosure has been shown and described with reference to various embodiments thereof, it will be understood by those skilled in the art that various changes in form and details may be made therein without departing from the scope of the present disclosure as defined by the appended claims.

## Claims

1. An operating method of an image display apparatus, the operating method comprising:
receiving a request of entering into a personal screen mode from a first control device;
receiving an input of user authentication information;
when the received input of user authentication information coincides with user authentication information corresponding to a first personal screen, displaying the first personal screen; and
granting, to the first control device, a control of the first personal screen that is displayed.

2. The method of claim 1, wherein the user authentication information includes at least one of user's facial information, predetermined pattern information, user's voiceprint information, a password, and identification information of a control device.

3. The method of claim 1 or 2, further comprising:
receiving a control command from the first control device; and
controlling and displaying the first personal screen according to the control command.

4. The method of claim 3, further comprising:
terminating the displaying of the first personal screen when the control command is not received within a predetermined time.

5. The method of one of claims 1 to 4, further comprising:
terminating the displaying of the first personal screen when a user corresponding to the first personal screen is not recognized.

6. The method of one of claims 1 to 5, further comprising:
receiving a control command from a second control device;
displaying a message for requesting a selection of whether to convert the first personal screen to a second personal screen corresponding to the second control device;
receiving an input of selecting whether to convert the first personal screen to the second personal screen from the first control device;
terminating the displaying of the first personal screen;
displaying the second personal screen; and
granting a control of the second personal screen to the second control device.

7. The method of claim 6, wherein the displaying of the second personal screen further comprises receiving an input of user authentication information, and, when the received input of user authentication information coincides with user authentication information corresponding to the second personal screen, displaying the second personal screen.

8. The method of one of claim 1 to 7, further comprising:
receiving a control command from a third control device;
determining whether the third control device is one of a plurality of control devices that correspond to the first personal screen; and
in response to a determination that the third control device is one of a plurality of control devices that correspond to the first personal screen, controlling and displaying the first personal screen according to the control command from the third control device.

9. An image display apparatus comprising:
a user input unit configured to receive a request of entering into a personal screen mode from a first control device and receiving an input of user authentication information;
a display unit configured to display a first personal screen when the received input of user authentication information coincides with user authentication information corresponding to the first personal screen; and
a control unit configured to grant, to the first control device, a control of the first personal screen that is displayed.

10. The image display apparatus of claim 9, wherein the user authentication information comprises at least one of user's facial information, predetermined pattern information, user's voiceprint information, a password, and identification information of a control device.

11. The image display apparatus of claim 9 or 10, wherein the user input unit receives a control command from the first control device, and
wherein the control unit controls and displays the first personal screen according to the control command.

12. The image display apparatus of claim 11, wherein the control unit terminates the displaying of the first personal screen, when the control command is not received within a predetermined time.

13. The image display apparatus of one of claims 9 to 12, wherein the control unit terminates the displaying of the first personal screen, when a user corresponding to the first personal screen is not recognized.

14. The image display apparatus of one of claims 9 to 13, wherein the user input unit receives a control command from a second control device;
the display unit displays a message for requesting a selection of whether to convert the first personal screen to a second personal screen corresponding to the second control device; and
the control unit terminates the displaying of the first personal screen and displays the second personal screen in response to receiving an input of selecting whether to convert the first personal screen to the second personal screen from the first control device, and grants a control of the second personal screen to the second control device.

15. The image display apparatus of one of claims 9 to 14, wherein the user input unit receives a control command from a third control device; and
the control unit determines whether the third control device is one of a plurality of control devices that correspond to the first personal screen, controls and displays the first personal screen according to the control command in response to determining that the third control device is one of a plurality of control devices that are corresponding to the first personal screen.
